Europäisches Patentamt

European Patent Office

Office européen des brevets

(11) Veröffentlichungsnummer: **0 277 324 B1**

# (12) EUROPÄISCHE PATENTSCHRIFT

(45) Veröffentlichungstag der Patentschrift: **21.10.92**

(21) Anmeldenummer: **87118472.7**

(22) Anmeldetag: **14.12.87**

(51) Int. Cl.⁵: **F16H 59/02**

(54) **Schaltstange für ein Gangschaltgetriebe.**

(30) Priorität: **04.02.87 DE 3703290**

(43) Veröffentlichungstag der Anmeldung:
**10.08.88 Patentblatt 88/32**

(45) Bekanntmachung des Hinweises auf die
Patenterteilung:
**21.10.92 Patentblatt 92/43**

(84) Benannte Vertragsstaaten:
**DE ES FR GB IT SE**

(56) Entgegenhaltungen:
**DD-A- 220 940**
**DE-A- 2 743 875**
**DE-B- 1 755 476**
**DE-B- 2 045 777**
**DE-B- 2 658 274**

(73) Patentinhaber: **Dr.Ing.h.c. F. Porsche Aktien-**
**gesellschaft**
**Porschestrasse 42**
**W-7000 Stuttgart 40(DE)**

(72) Erfinder: **Müller, Robert**
**Badstrasse 21**
**W-7251 Mönsheim(DE)**

**Beschreibung**

Die Erfindung betrifft eine Schaltstange für ein Gangschaltgetriebe nach dem Oberbegriff des Anspruchs 1.

Eine derartige, aus DE-AS 21 65 629 bekannte Schaltstange besteht aus zwei Teilstücken, die durch ein Gabelgelenk miteinander verbunden sind. Zur Schwingungsentkopplung ist das Gabelgelenk mit einer elastischen Buchse ausgestattet. Macht man eine solche Buchse weichelastisch, um eine gute Schwingungsentkopplung zu erreichen, so wird die Schaltstange insgesamt so nachgiebig, daß sich keine präzise Zuordnung zwischen der Bewegung des Handschalthebels und der Stellung der Schaltgabeln im Getriebe ergibt.

Aus DE-B-17 55 476 ist es bekannt, die beiden Teilstücke einer Schaltstange durch ein schwingungsdämpfendes Kupplungsgelenk miteinander zu verbinden. Das Kupplungsgelenk ist in einem Dämpfungskörper untergebracht, der in Längsrichtung der Schaltstange auf einem kurzen Wegstück weichfedernd, jedoch mit anschließender starker Federprogression ausgebildet ist.

Es ist die Aufgabe der Erfindung, eine solche Schaltstange mit einem Dämpfungskörper derart zu gestalten, daß sowohl eine gute Schwingungsentkopplung als auch eine präzise Schaltung beim Vorwählen und Schalten der Getriebegänge möglich wird.

Eine Lösung dieser Aufgabe gelingt durch die kennzeichnenden Merkmale des Anspruchs 1. Wenn der in die Schaltstange eingesetzte Dämpfungskörper in Verdrehrichtung der Schaltstange sehr torsionssteif ausgebildet ist, wird auch für die Gangvorwahl eine exakte Zuordnung zwischen der Wählbewegung des Handschalthebels und der Vorwählstellung der diesbezüglichen Getriebebausteine erzielt. Die hierfür nötigen strukturellen Merkmale des Dämpfungskörpers und seiner Anbindung an die beiden Stangenteile der Schaltstange sind in Anspruch 1 enthalten.

Weitere, die Erfindung ausgestaltende Merkmale enthalten die Unteransprüche.

Ein Ausführungsbeispiel der Erfindung ist in der Zeichnung dargestellt und wird nachfolgend erläutert.

Es zeigt:

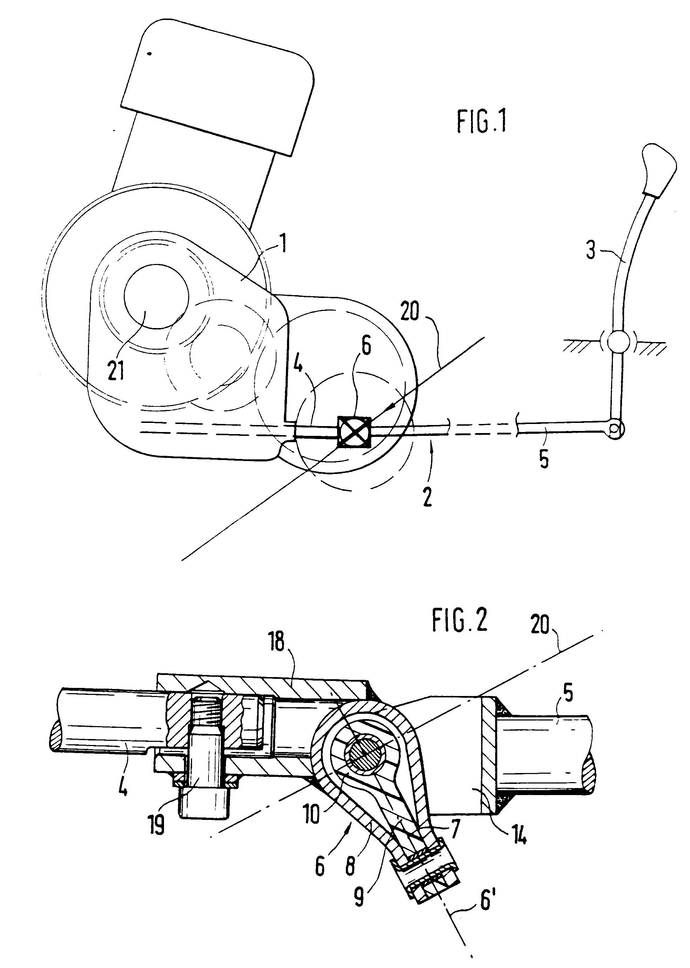

Fig. 1    Schaltstange zwischen Motorgetriebeblock und Handschalthebel,

Fig. 2    Längsschnitt durch die Schaltstange und den Dämpfungskörper,

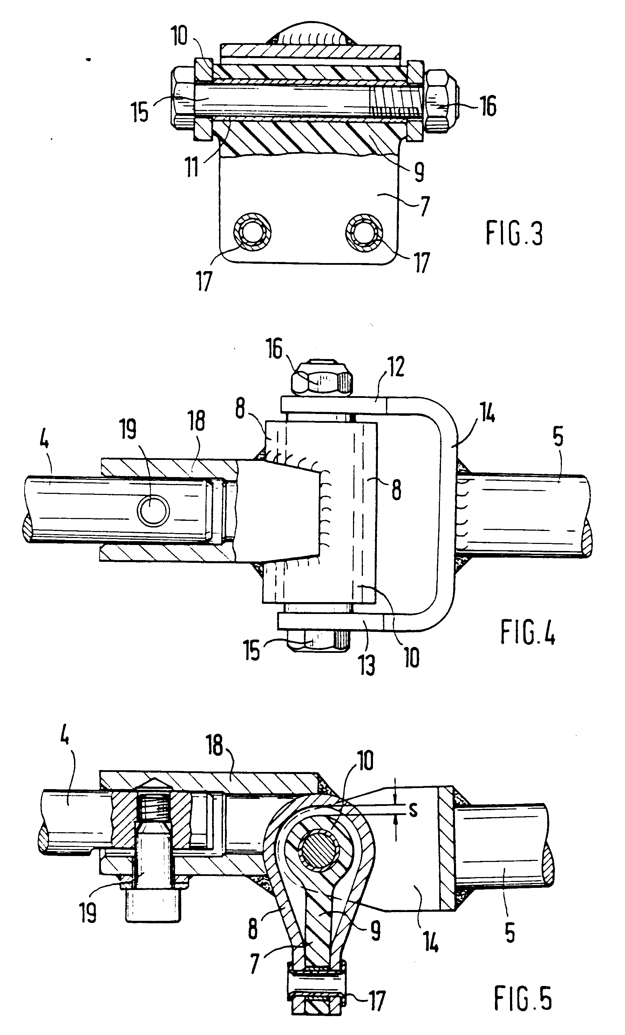

Fig. 3    Querschnitt durch den Dämpfungskörper,

Fig. 4    Draufsicht zu Figur 2,

Fig. 5    alternative Ausführung der Zuordnung zwischen Dämpfungskörper und Schaltstange.

In einen Motorgetriebeblock 1 greift eine Schaltstange 2 ein, die mit einem Handschalthebel 3 zum Vorwählen der Getriebegänge drehbar und zum Schalten der Getriebegänge längsverschieblich ist. Die Schaltstange 2 ist aus zwei Stangenteilen 4 und 5 zusammengesetzt, wobei das in den Motorgetriebeblock 1 eingreifende Stangenteil 4 über einen Dämpfungskörper 6 gelenkig mit dem zum Handschalthebel 3 führenden anderen Stangenteil 5 verbunden ist. Der Dämpfungskörper 6 besteht aus einer Dämpfungsplatte 7 und einem um sie als Verschlingung herumgebogenen Metallblech 8. Die Dämpfungsplatte 7 ist aus Gummi mit einer Textileinlage 9 gefertigt und an ihrer einen Seite mit einer zylindrisch verdickten, sich über die ganze Plattenbreite erstreckende Gelenkaufnahme 10 versehen. In eine mittig zur Gelenkaufnahme 10 und mittig zur Längserstreckung der Schaltstange 2 liegende Bohrung der Gelenkaufnahme 10 ist eine Metallhülse 11 einvulkanisiert, die an ihren Stirnseiten zwischen den Gabeln 12 und 13 eines am Stangenteil 5 angeschweißten Gabelkopfes 14 gehalten ist. Mit einer durch die Metallhülse 11 und die Gabeln 12 und 13 durchgesteckten Sechskantschraube 15 und einer Mutter 16 ist der Dämpfungskörper 6 gelenkig am Stangenkopf 14 befestigt.

Um die Gelenkaufnahme 10 der Dämpfungsplatte 7 ist das Metallblech 8 so herumgebogen, daß es ringsum zu ihr einen radialen Abstand s hat. Die beiden Enden des Metallblechs 8 sind bündig zur Unterseite der Dämpfungsplatte 7 mit ihr durch eine Hohlniete 17 verbunden. Das zum Motorschalthebelgetriebeblock 1 führende Stangenteil 4 ist in eine an das Metallblech 8 angeschweißte Hülse 18 eingepaßt und mit ihr durch eine radiale Paßschraube 19 verbunden.

Im unbelasteten Zustand gestattet der Dämpfungskörper 6 infolge seiner Weichheit axiale Schwing- und Bewegungsamplituden im Bereich einiger Millimeter aufzunehmen. Sobald während eines Schaltvorgangs der Dämpfungskörper 6 mit höheren Axialkräften belastet wird, kommt die Gehäuseaufnahme der Dämpfungsplatte 7 an dem Metallblech 8 zur Anlage. Die dadurch zur Wirkung kommende höhere Federkennung ermöglicht ein gutes Schaltgefühl. Eine sich so ergebende verschlechterte Schwingungsisolierung während des Schaltvorganges wird in Kauf genommen, da sich der Dämpfungskörper 6 nach Loslassen des Handschalthebels 3 selbsttätig wieder in die Mittellage mit beidseitigem Radialspalt s zu dem Metallblech 8 einstellt. Alle Ausgleichsbewegungen werden durch elastische Verformung der Dämpfungsplatte 7 ohne Gleit- oder Rollreibung bewerkstelligt. Damit ist Wartungsfreiheit und Unempfindlichkeit gegen leichte Verschmutzung und Korrosion gegeben.

Der Dämpfungskörper 7 ist sehr torsionssteif ausgebildet, um durch Drehen der Schaltstange das Vorwählen der Getriebegänge exakt ausführen zu können. Die Verdrehsteifigkeit kann durch Bemessen einer in die Dämpfungsplatte 7 einvulkanisierten textilen Verstärkung 9 gezielt beeinflußt werden.

Am getriebeseitigen Stangenteil 4 liegen starke Schwingungen an, deren Bewegungsrichtung 20 tangential zu einem um die Motorkurbelwelle 21 gezogenen Kreis verlaufen und zur Längsachse der Schaltstange 2 einen Winkel von etwa 45° bildet. Diese Schwingungen lassen sich optimal dämpfen, wenn der Dämpfungskörper 6 unter einem Winkel von etwa 45° zur Schaltstange 2 so angeordnet ist, daß die Längsachse 6' des Dämpfungskörpers 6 senkrecht zur Bewegungsrichtung 20 der Schwingungen des Motorgetriebeblocks 1 liegt.

**Patentansprüche**

1. Schaltstange (1) für ein an einem Motorblock angeflanschtes Gangschaltgetriebe eines Kraftfahrzeuges, mit deren Dreh- und Längsbewegungen manuell die gewünschten Getriebegänge vorwählbar und schaltbar sind, wobei die Schaltstange (1) zweiteilig ausgeführt ist und beide Stangenteile (4, 5) durch ein schwingungsdämpfendes Kupplungsgelenk miteinander verbunden sind und wobei das Kupplungsgelenk in einem Dämpfungskörper (6) untergebracht ist, der in Längsrichtung der Schaltstange (2) auf einem kurzen Wegstück weichfedernd, jedoch mit anschließender starker Federprogression ausgebildet ist, gekennzeichnet durch folgende Merkmale:
   - der Dämpfungskörper (6) ist in Verdrehrichtung der Schaltstange (2) sehr torsionssteif ausgebildet,
   - der Dämpfungskörper (6) besteht aus einer rechteckigen Dämpfungsplatte (7) und einem sie ummantelnden Metallblech (8),
   - die Dämpfungsplatte (7) weist an ihrer einen Seite eine zylindrisch verdickte, sich längs der Plattenbreite erstreckende Gelenkaufnahme (10) auf,
   - das Metallblech (8) ist um die Gelenkaufnahme (10) mit geringem Radialspiel (s) U-förmig herumgebogen und an der Dämpfungsplatte befestigt,
   - die Gelenkaufnahme (10) liegt senkrecht zur Längsachse der Schaltstange (2),
   - die Gelenkaufnahme (10) ist mit dem einen Stangenteil (5) über eine Gelenkachse (15) verbunden,
   - das Metallblech (8) ist mit dem anderen Stangenteil (4) verbunden.

2. Schaltstange nach Anspruch 1, dadurch gekennzeichnet, daß die Dämpfungsplatte (7) aus Gummi oder Elastomer gefertigt ist und zur Torsionsversteifung einvulkanisierte Verstärkungselemente (9) enthält.

3. Schaltstange nach Anspruch 1, dadurch gekennzeichnet, daß an dem einen Stangenteil (5) ein gegabelter Stangenkopf (14) angebracht ist, zwischen dessen beiden parallelen Gabeln (12, 13) die Gelenkaufnahme (10) stirnseitig gehalten ist und mit ihnen durch eine als Gelenkachse dienende Sechskantschraube (15) schwenkbar verschraubt ist.

4. Schaltstange nach Anspruch 3, dadurch gekennzeichnet, daß in eine Bohrung der Gelenkaufnahme (10) eine Metallhülse (11) einvulkanisiert ist, in die die Sechskantschraube (15) leicht drehbar eingepaßt ist.

5. Schaltstange nach einem der Ansprüche 1 bis 4, dadurch gekennzeichnet, daß der Dämpfungskörper (6) zur Längsachse der Schaltstange (2) einen Winkel von ca. 45° bildet, so daß seine Längsachse (6') senkrecht zur Bewegungsrichtung (20) der Hauptschwingung des Motorgetriebeblocks (1) liegt.

**Claims**

1. A selector shaft (1) for a gearshift transmission - flanged to an engine block - of a motor vehicle, by means of which the desired gear speeds can be manually preselected and shifted by rotational and longitudinal movements, wherein the selector shaft (1) is formed in two parts and the two shaft parts (4, 5) are connected to each other by a vibration-damping coupling and wherein the coupling is housed in a damping body (6) which is formed in the longitudinal direction of the selector shaft (2) so as to be weakly resilient over a short distance, but with subsequent strong spring progression, characterised by the following features:
   - the damping body (6) is formed so as to be highly torsionally rigid in the direction of rotation of the selector shaft (2),
   - the damping body (6) comprises a rectangular damping plate (7) and a metal plate (8) surrounding it,
   - the damping plate (7) has on one of its sides a cylindrically thickened articulated mounting (10) extending along the breadth of the plate,
   - the metal plate (8) is bent around the articulated mounting (10) in a U-shaped manner with a small degree of radial clearance (s) and fastened to the damping plate,

- the articulated mounting (10) lies perpendicular to the longitudinal axis of the selector shaft (2),
- the articulated mounting (10) is connected to one shaft part (5) via an articulated axle (15),
- the metal sheet (8) is connected to the other shaft part (4).

2. A selector shaft according to claim 1, characterised in that the damping plate (7) is manufactured from rubber or elastomer and contains vulcanised reinforcing elements (9) for torsional rigidity.

3. A selector shaft according to claim 1, characterised in that on one shaft part (5) is mounted a forked shaft head (14), between the two parallel jaws (12, 13) of which the articulated mounting (10) is held at the front end and to which it is tiltably screwed by means of a hexagon-head screw (15) serving as an articulated axle.

4. A selector shaft according to claim 3, characterised in that a metal sleeve (11) is vulcanised in a bore of the articulated mounting (10), the hexagon-head screw (15) being fitted into the said metal sleeve so as to be easily rotatable.

5. A selector shaft according to any one of claims 1 to 4, characterised in that the damping body (6) forms an angle of approximately 45° to the longitudinal axis of the selector shaft (2), with the result that its longitudinal axis (6') lies perpendicular to the direction of movement (20) of the main vibration of the engine gearbox unit (1).

**Revendications**

1. Tringle de commande (2) pour une boîte de changement de vitesse bridée sur un bloc-moteur d'un véhicule automobile, dont les mouvements de rotation et de déplacement longitudinal permettent de sélectionner et de commander manuellement les vitesses voulues, la tringle de commande (1) étant en deux parties et les deux parties (4, 5) de la tringle étant assemblées entre elles par un joint d'articulation amortissant les oscillations et le joint d'articulation étant logé dans un corps d'amortissement (6) qui, dans la direction longitudinale de la tringle de commande (2), est élastique sur une courte distance mais qui ensuite présente une progression de ressort plus forte, caractérisée par les caractéristiques suivantes.

- le corps d'amortissement (6) est très rigide en torsion dans le sens de rotation de la tringle de commande (2),
- le corps d'amortissement (6) est constitué d'une plaque d'amortissement (7) rectangulaire et d'une tôle métallique (8) l'enveloppant,
- la plaque d'amortissement (7) présente, sur l'un de ses côtés, un logement de joint d'articulation (10), s'étendant le long de la largeur de la plaque,
- la tôle métallique (8) est repliée en U autour du logement (10), avec un jeu radial (s) réduit et est fixée sur la plaque d'amortissement,
- le logement (10) est perpendiculaire à l'axe longitudinal de la tringle de commande (2),
- le logement (10) est assemblé à une partie (5) de la tringle par un axe d'articulation (15),
- la tôle métallique (8) est assemblée à l'autre partie (4) de la tringle.

2. Tringle de commande selon la revendication 1, caractérisée en ce que la plaque d'amortissement (7) est en caoutchouc ou en élastomère et comporte un élément de renfort (9) vulcanisé à l'intérieur, pour la rendre rigide en torsion.

3. Tringle de commande selon la revendication 1, caractérisée en ce que sur une partie (5) de la tringle est placée une tête (14) fourchue entre les deux fourches (12, 13) parallèles de laquelle le logement (10) est maintenu sur un côté frontal et est vissé pivotant avec celles-ci, au moyen d'une vis à six pans (15) servant d'axe d'articulation.

4. Tringle de commande selon la revendication 3, caractérisée en ce qu'un manchon métallique (11) dans lequel la vis à six pans (15) est ajustée de manière à pouvoir tourner facilement, est vulcanisé à l'intérieur d'un alésage du logement (10).

5. Tringle de commande selon l'une des revendications 1 à 4, caractérisée en ce que le corps d'amortissement (6) forme un angle de 45° environ par rapport à l'axe longitudinal de la tringle de commande (2), ce qui fait que son axe longitudinal (6') est perpendiculaire à la direction de déplacement (20) de l'oscillation principale du bloc moteur-boîte de vitesses (1).

FIG.1

1

20

6

21

4

2

3

5

FIG.2

20

18

5

4

19

10

6

8

7

14

9

6'

FIG.3

FIG.4

FIG.5